# EUROPEAN PATENT SPECIFICATION

(11) **EP 4 359 351 B1**
(45) Date of publication and mention of the grant of the patent: **26.02.2025**
(21) Application number: 22741850.6
(22) Date of filing: 24.06.2022
(51) Int. Cl.: C02F 3/32, C02F 3/06, C02F 3/10, C02F 103/32, C02F 103/06

(54) **METHOD AND APPARATUS FOR TREATING WASTE WATER CONTAINING BIODEGRADABLE ORGANIC SUBSTANCES BY USING BLACK SOLDIER FLY LARVAE**
VERFAHREN UND VORRICHTUNG ZUR BEHANDLUNG VON BIOLOGISCH ABBAUBAREN ORGANISCHEN SUBSTANZEN ENTHALTENDEM ABWASSER MITTELS SOLDATEN-FLIEGENLARVEN
PROCÉDÉ ET APPAREIL POUR LE TRAITEMENT DES EAUX USÉES CONTENANT DES SUBSTANCES ORGANIQUES BIODÉGRADABLES À L'AIDE DE LARVES DE MOUCHE ARMÉE NOIRE

(30) Priority: 25.06.2021 IT 202100016700
(43) Date of publication of application: 01.05.2024
(73) Proprietor: Universita' Degli Studi Di Padova, 35122 Padova (IT)
(72) Inventor: GROSSULE, Valentina, 37028 Roverè Veronese (IT); COSSU, Raffaello, 30122 Venezia (IT)
(74) Representative: Rondano, Davide
(86) International application number: PCT/IB2022/055888
(87) International publication number: WO 2022/269563

(56) References cited:
- CN-A- 110 050 760
- CN-A- 111 328 772
- CN-U- 210 127 128
- CN-U- 211 497 305
- CN-U- 212 065 394

## Description

### Technical field of the invention

The present invention relates generally to the field of treatment of waste water containing biodegradable organic substances, and more particularly to a method and apparatus for the treatment of such waste water by using black soldier fly larvae.

### State of the art

In the field of waste management, the concept of the Circular Economy is becoming more and more established, and thus there is a need to develop processes that allow to combine the need for waste disposal with the benefits of the recovery of material and energy resources.

In this regard, processes based on the use of larvae of the black soldier fly (commonly referred to by the English acronym BSF) are recently being studied for the treatment of waste containing biodegradable organic material. Such larvae are in fact capable of metabolizing and stabilizing huge amounts of organic material by transforming it into larval biomass, which, being rich in proteins and lipids, is very suitable for being reused as animal feed (as is or after extraction of the protein component) or for the production of biodiesel (as far as its lipid component is concerned). The black soldier fly larvae have been widely used for the treatment of various putrescible solid wastes (metabolic wastes, organic fraction from garbage collection, agro-food industry wastes, etc.), as this type of waste provides an optimal environment for the larvae. On the other hand, the use of such larvae for the treatment of liquid waste, particularly waste water containing organic substances, appears critical, since the liquid environment is not conducive to larvae survival. The larvae of the black soldier fly, which is a terrestrial rather than aquatic insect, are unlikely to survive in a purely liquid environment, with a mortality rate (by drowning) of more than 50 percent, which makes their use for liquid waste treatment ineffective.

Systems for the treatment of waste water containing biodegradable organic material using black soldier fly larvae are disclosed, for example, in CN212065349U, CN210127128U and CN211497305U.

According to CN212065349U larvae are arranged in a container and waste water is sprayed on the larvae from above. According to CN210127128U the larvae are arranged in a container and waste water is supplied at the bottom of the container. Channels are also provided for the movement of the larvae that extend from one side of the container to the other. Finally, according to CN211497305U the larvae are arranged in containers formed by grids and waste water is sprayed laterally on the larvae.

All the known solutions discussed above rely on the use of flat surfaces as support beds on which the larvae are placed, which is an important limitation of these solutions. In fact, as mentioned earlier, black soldier fly larvae are terrestrial insects, unable to survive for long in a liquid environment, so when immersed in high levels of liquid they die by drowning. To prevent the larvae from drowning, the level of the liquid in the support bed on which the larvae are placed must be very low, on the order of a few millimetres. This obviously has a number of disadvantages, such as:
- reduced contact surface area between larvae and waste water to be treated, and thus reduced amount of waste water treated per unit volume of the reactor;
- reduced hydraulic residence time (HRT), since, assuming that the volumetric flow rate is constant, a reduced amount of waste water treated means a correspondingly reduced value of the HRT parameter; this means less time available for the larvae to treat the waste water and thus lower efficiency of the treatment process; and
- increased space occupied by the treatment apparatus, since a large number of containers must be used to increase the amount of waste water treated, resulting in increased costs and complexity of the apparatus.

### Summary of the invention

It is an object of the present invention to provide a solution for the treatment of waste water containing biodegradable organic substances by using black soldier fly larvae, which overcomes the limitations of the prior art discussed above, in particular by allowing the treatment efficiency to be increased and the amount of waste water treated to be increased for the same apparatus size.

This and other objects are fully achieved according to the present invention by a method as defined in the attached independent claim 1, as well as by an apparatus as defined in the attached independent claim 12.

Preferred modes for carrying out the method, as well as preferred embodiments of the apparatus, according to the present invention are defined in the dependent claims, the subject matter of which is intended to form an integral part of the following description.

In summary, the invention is based on the idea of supporting the black soldier fly larvae with a support bed made of a solid non-biodegradable material, wherein the support bed has a three-dimensional, or volumetric, structure, that is, a structure that extends in three dimensions (thus not only in a plane, as in the prior art discussed above, but also in height), as well as a porous structure, thereby allowing the larvae to move within the pores or passages present within the support bed. The support bed can thus be submerged in a high liquid head, at least equal to the height of the support bed itself, and allow the larvae on the one hand to come into contact with the liquid to be treated and on the other to move according to their metabolic needs, dipping into the liquid to feed themselves and re-emerging to breathe. Bu virtue of the use of such a support bed, an environment conducive to the survival of the larvae is created, thereby increasing the efficiency of the treatment. Moreover, by virtue of a structure of the support bed that is no longer merely two-dimensional, but three-dimensional (or volumetric), the movement of the larvae, and thus the treatment activity performed by them, are no longer limited to a flat surface but take place within a certain volume, namely the volume of the support bed. This allows, for the same surface area of the container in which the larvae are placed, to increase the liquid head and hence the volume of waste water treated. Therefore, the following advantages are achieved:
- increased contact surface area between larvae and waste water, resulting in an increase in the amount of waste water treated per unit volume of the reactor;
- increased hydraulic residence time (HRT), and thus increased efficiency of the treatment process; and
- reduction in the number of reactors, for the same amount of waste water to be treated, resulting in reduced costs and complexity of the apparatus.

The support bed is made of a material that is non-biodegradable, and therefore non-edible for the larvae, so that the larvae are forced to eat only the substances contained in the liquid to be treated, thus preventing them from eating also substances contained in the support bed. This material is preferably a plastic material (including silicone material, elastomeric material, etc.), but it may also be another material, for example stone material, metal material or composite material, and/or a combination of the above materials.

The material used for the support bed should have adequate thermal and chemical resistance, depending on the environmental conditions of the process and on the liquid to be treated. For example, polypropylene (PP) is susceptible to photodegradation and therefore its use may be critical when exposed to UV radiation (sunlight or artificial light that simulates the day/night cycle); polyethylene terephthalate and polyurethane are more biodegradable by any microorganisms that may be present, while polyamide (nylon), in addition to this problem, absorbs moisture more readily, which may compromise its chemical and physical characteristics.

In addition, the material should not release substances that may impair the end use of the larval biomass.

Preferably, the support bed is configured in such a way that, once immersed in the liquid to be treated, the homogeneity of the resulting mixture (which can be either saturated or partially saturated) is ensured in order to avoid the formation of completely liquid zones, in which the survival of the larvae would be severely jeopardized.

At the same time, the support bed preferably has a porosity such as to allow the mobility of the larvae at any point, so as to maximize the possibility of contact of the larvae with the liquid to be treated.

### Brief description of the figures

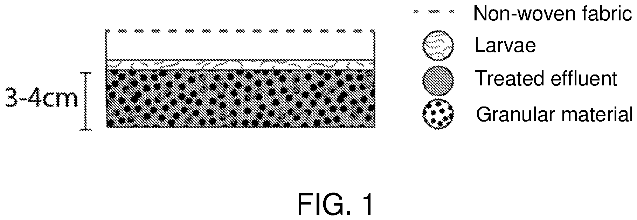

In the following detailed description, reference will be made to the drawing of Figure 1, which schematically depicts a batch reactor used in laboratory to test the treatment method of the present invention.

### Detailed description

As previously anticipated, in order to enable a more effective and efficient treatment of waste water containing putrescible organic matter (for example food industry effluent, landfill leachate, etc.), the invention proposes to insert into the process reactor, for the support of the black soldier fly larvae, a support bed made of solid non-biodegradable material, which support bed has a three-dimensional, or volumetric, structure, that is, a structure that extends in the three dimensions, thus not only in the plane but also in height, as well as a porous structure, so as to allow the larvae to move within the pores or passages of the support bed.

Since it has a three-dimensional, or volumetric, structure, the support bed can be immersed in a high liquid head without thereby jeopardizing the survival of the larvae. A similar level of survival of the larvae is thus achieved as in the case of their use for the treatment of organic solid waste, and, compared with the prior art discussed above, a significantly higher treatment efficiency is achieved.

In addition, since the material used for the support bed is non-biodegradable, it is not edible for the larvae and is completely recyclable without giving rise to any final solid waste production.

With reference to Figure 1, according to an embodiment of the present invention the support bed is formed by granules of plastic material (including silicone or elastomeric material) with specific weight greater than that of the effluent to be treated. Such granules are, for example, 2-4 mm in size, but of course their size may vary, depending on market availability and cost. The granules are arranged according to a static arrangement to form a layer with adequate thickness, for example several centimetres. In the reactor in Figure 1, the thickness of the granule layer is 2-3 cm, but it might also be greater, for example 5-10 cm. The effluent to be treated is added to the solid material of the support bed so as to fill all the voids in the support bed and thus achieve a water-saturated condition of the support bed. In this regard, the thickness of the support bed indicated above may also vary according to the degree of saturation of the bed, in case partial saturation conditions are adopted.

Instead of plastic material, other non-biodegradable materials, such as stone materials, metal materials, or composite materials, may be used for the support bed. Such materials may also be used in combination with each other. The material used for the support bed will preferably be chosen so as to have adequate thermal and chemical resistance, depending on the environmental process conditions, on the liquid to be treated and on the end use of the larval biomass. For example, a material that is not susceptible to photodegradation will be used as the material for the support bed in case UV radiation is used for day/night cycle simulation (artificial or natural light). Furthermore, the material used for the support bed will advantageously be a material that is resistant to a pH between 4 and 9 and to temperatures up to 45°C (these being the possible operating conditions of the larvae, in terms of pH and temperature).

In case the support bed is made of granular material, as in the example of Figure 1, the granules may be of any shape, such as solid or hollow shape, cylindrical or spherical shape, branched or irregular shape, etc.

The size of the granules may also vary, for example in the range of less than 1 mm to 5 cm.

The support bed may also be structured in blocks or layers of appropriate porosity, to form lattice structures, so as to maximize the contact surface between the support bed and the liquid to be treated and thus maximize the interaction between the larvae and the liquid.

The support bed may be used with respect to the liquid to be treated either under static conditions, i.e. kept stationary in the liquid, or under dynamic conditions, i.e. driven in motion within the liquid.

The final mixture consisting of the solid support bed and the liquid effluent may be either fully saturated (i.e. with the voids in the porous structure of the support bed being completely filled by the effluent) or partially saturated (in which case, with a proper structure of the support bed it is possible to have simultaneously saturated and unsaturated zones, i.e. zones occupied by the liquid and air).

Before or during treatment, aeration of the solid-liquid mixture may be provided in order to promote respiration of the larvae and thus increase their survival rate. This can also be achieved by using, as a support matrix, aeration systems with a three-dimensional or volumetric structure adequate to provide support for the larvae. These systems simultaneously fulfil both the aeration function and the support function for the larvae. For example, so-called MABR ("Membrane Aerated Biological Reactor") systems may be used as aeration and support systems.

Where appropriate, heating of the support bed and/or of the solid-liquid mixture and/or of the surrounding environment may also be provided in order to ensure optimal environmental conditions for the growth of the larvae.

The Applicant has conducted experiments on a laboratory-scale reactor, obtaining very promising results, as shown below, which lead to believe that the treatment method presented here can find full application on an industrial scale, ensuring a better cost-benefit ratio than the methods used to date for the treatment of waste water containing biodegradable organic substances.

Referring again to Figure 1, reactors consisting of plastic containers (volume of 0.6 I; size of 13.5 cm x 13.5 cm x 5.5 cm), containing 150 ml of waste water to be treated (of varying quality) and, as a support bed, a structure formed by polybutylene-terephthalate (Valox^{™}) granules with a diameter of 2-4 mm, were used for experimentation. The granules were added to the effluent in such a way as to avoid surface liquid layers and thus ensure that the larvae supported by the granules had contact with the air. Overall, the thickness of the final solid-liquid mixture was 3-4 cm. The effluent consisted in leachate obtained synthetically in the laboratory. Different qualities of leachate were used. In each reactor, varying numbers of larvae (20 to 160) were added. The containers were sealed by means of an air-breathing film of nonwoven fabric. The best performance (in terms of treatment) was achieved with the leachate having higher concentrations of rapidly biodegradable organic matter (volatile acids (VFA) = 450 gC-CH3COOH) and fed to 80 larvae, achieving 90% reduction of organic matter (VFA) in 10 days.

A further improvement in the treatment efficiency is conceivable by providing control of the temperatures inside the solid-liquid mixture (so as to ensure optimal temperatures for the larvae) and/or continuous feeding of the reactor with the substrate to be treated. Before or immediately after feeding the liquid to be treated to the process reactor, the liquid may undergo a conditioning operation, with the aim of changing its quality. Such a conditioning operation may, for example, involve the removal of inhibiting substances by appropriate pre-treatment and/or the addition of nutrients for the larvae.

The liquid to be treated may be fed into the reactor from above, in which case it may be advantageous to collect the liquid from below through a filter placed on the bottom of the reactor. It should be noted in this regard that the feeding of the liquid to be treated is advantageously done without spraying, unlike some of the known examples illustrated in the introductory part of the present description. This makes it possible to avoid problems of clogging of the spray system or to dispense with pre-treatment systems to separate solid particles from the liquid to be treated (which pre-treatment systems, on the other hand, are indispensable in case the liquid to be treated is fed by spraying, in order to avoid problems of clogging of the spray systems).

The present invention has been described herein with reference to preferred modes of implementation thereof. It is to be understood that other modes of implementation may be envisaged, which share the same inventive core with the one described herein, as defined by the scope of protection of the following claims.

## Claims

1. Method for treating waste water containing biodegradable organic substances by feeding the liquid to be treated into a process reactor containing black soldier fly larvae to metabolize the organic substances contained in the liquid to be treated,
**characterized by** the insertion into the process reactor of a support bed made of solid non-biodegradable material to support the larvae, wherein the support bed has a volumetric, or three-dimensional, as well as porous structure, so that the larvae on the one hand are allowed to come into contact with the liquid to be treated and on the other are allowed to move through the pores or passages in the support bed based on their metabolic needs, plunging in the liquid to feed themselves and re-emerging to breathe, wherein the volumetric, or three-dimensional, structure of the support bed is a granular structure, with granules arranged to form a layer with a thickness on the order of several centimetres, or a lattice structure.

2. Method according to claim 1, wherein the support bed is made of at least one of the following materials: plastic material, including silicone or elastomeric material, stone material, metal material, composite material.

3. A method according to claim 1 or claim 2, wherein the liquid to be treated is added to the solid material of the support bed so as to fill all pores of the structure of the support bed and thereby achieve a water-saturated condition of the support bed.

4. Method according to claim 1 or claim 2, wherein the liquid to be treated is added to the solid material of the support bed so as to create the simultaneous presence of saturated and unsaturated zones within the support bed.

5. Method according to any of the preceding claims, wherein the support bed is kept stationary or driven in motion within the liquid to be treated.

6. Method according to any one of the preceding claims, further comprising the step operation of aerating the mixture formed by the support bed and the liquid to be treated, so as to promote respiration of the larvae and thereby increase their survival rate.

7. Method according to any one of the preceding claims, further comprising the operation of controlling the temperature in the support bed and/or in the mixture formed by the support bed and the liquid to be treated and/or in the surrounding environment.

8. Method according to any of the preceding claims, wherein the reactor is continuously fed with the liquid to be treated.

9. Method according to any one of the preceding claims, further comprising the operation of recirculating the liquid to be treated.

10. Method according to any one of the preceding claims, further comprising the operation of conditioning the liquid to be treated prior to, or immediately after, feeding the liquid to be treated into the process reactor.

11. Method according to any one of the preceding claims, wherein the liquid to be treated is fed from above into the reactor, and wherein preferably the liquid is also filtered on the bottom of the reactor.

12. Apparatus for treating waste water containing biodegradable organic substances by using black soldier fly larvae to metabolize the organic substances contained in the liquid to be treated, the apparatus comprising at least one process reactor with a support bed made of solid non-biodegradable material on which the black soldier fly larvae are arranged,
**characterized in that** the support bed has a volumetric, or three-dimensional, as well as porous structure, so as to allow the larvae on the one hand to come into contact with the liquid to be treated and on the other to move through the pores or passages present in the support bed based on their metabolic needs, plunging in the liquid to feed themselves and re-emerging to breathe,
wherein the volumetric, or three-dimensional, structure of the support bed is a granular structure, with granules arranged to form a layer with a thickness on the order of several centimetres, or a lattice structure.

13. Apparatus according to claim 12, wherein the support bed is made of at least one of the following materials: plastic material, including silicone or elastomeric material, stone material, metallic material, composite material.

14. Apparatus according to claim 12 or claim 13, further comprising feeding means for feeding from above the liquid to be treated into said at least one process reactor.

15. Apparatus according to any one of claims 12 to 14, further comprising filtration means placed on the bottom of said at least one process reactor for filtering the liquid to be treated, and/or temperature control means for controlling the temperature in the support bed and/or in the mixture formed by the support bed and the liquid to be treated.

## Patentansprüche

1. Verfahren zum Behandeln von Abwasser, das biologisch abbaubare organische Substanzen enthält, durch Zuführen der zu behandelnden Flüssigkeit in einen Prozessreaktor, der Larven der Schwarzen Soldatenfliege enthält, um die in der zu behandelnden Flüssigkeit enthaltenen organischen Substanzen zu verstoffwechseln,
**gekennzeichnet durch** das Einbringen eines Trägerbetts aus festem, biologisch nicht abbaubarem Material in den Prozessreaktor, um die Larven zu tragen, wobei das Trägerbett eine volumetrische oder dreidimensionale sowie poröse Struktur aufweist, so dass es den Larven einerseits ermöglicht wird, mit der zu behandelnden Flüssigkeit in Kontakt zu kommen, und es ihnen andererseits ermöglicht wird, sich durch die Poren oder Durchgänge in dem Trägerbett auf der Grundlage ihres Stoffwechselbedarfs zu bewegen, wobei sie in die Flüssigkeit eintauchen, um sich zu ernähren, und wieder auftauchen, um zu atmen, wobei die volumetrische oder dreidimensionale Struktur des Trägerbetts eine körnige Struktur ist, wobei die Körner so angeordnet sind, dass sie eine Schicht mit einer Dicke in der Größenordnung von mehreren Zentimetern oder eine Gitterstruktur bilden.

2. Verfahren nach Anspruch 1, wobei das Trägerbett aus mindestens einem der folgenden Materialien besteht: Kunststoffmaterial, einschließlich Silikon- oder Elastomermaterial, Steinmaterial, Metallmaterial, Verbundmaterial.

3. Verfahren nach Anspruch 1 oder Anspruch 2, wobei die zu behandelnde Flüssigkeit dem festen Material des Trägerbetts zugegeben wird, um alle Poren der Struktur des Trägerbetts zu füllen und dadurch einen wassergesättigten Zustand des Trägerbetts zu erreichen.

4. Verfahren nach Anspruch 1 oder Anspruch 2, wobei die zu behandelnde Flüssigkeit dem festen Material des Trägerbetts zugegeben wird, um so das gleichzeitige Vorhandensein von gesättigten und ungesättigten Zonen innerhalb des Trägerbetts zu erzeugen.

5. Verfahren nach einem der vorhergehenden Ansprüche, wobei das Trägerbett innerhalb der zu behandelnden Flüssigkeit stationär gehalten oder in Bewegung versetzt wird.

6. Verfahren nach einem der vorhergehenden Ansprüche, das ferner den Arbeitsschritt des Belüftens der aus dem Trägerbett und der zu behandelnden Flüssigkeit gebildeten Mischung umfasst, um die Atmung der Larven zu fördern und dadurch ihre Überlebensrate zu erhöhen.

7. Verfahren nach einem der vorhergehenden Ansprüche, das ferner den Vorgang der Temperaturregelung in dem Trägerbett und/oder in dem aus dem Trägerbett und der zu behandelnden Flüssigkeit gebildeten Gemisch und/oder in der Umgebung umfasst.

8. Verfahren nach einem der vorhergehenden Ansprüche, wobei der Reaktor kontinuierlich mit der zu behandelnden Flüssigkeit eingeleitet wird.

9. Verfahren nach einem der vorhergehenden Ansprüche, das ferner den Vorgang des Umwälzens der zu behandelnden Flüssigkeit umfasst.

10. Verfahren nach einem der vorhergehenden Ansprüche, das ferner den Vorgang des Aufbereitens der zu behandelnden Flüssigkeit vor oder unmittelbar nach dem Zuführen der zu behandelnden Flüssigkeit in den Prozessreaktor umfasst.

11. Verfahren nach einem der vorhergehenden Ansprüche, wobei die zu behandelnde Flüssigkeit von oben in den Reaktor eingeleitet wird, und wobei die Flüssigkeit vorzugsweise auch am Boden des Reaktors gefiltert wird.

12. Vorrichtung zum Behandeln von Abwasser, das biologisch abbaubare organische Substanzen enthält, durch Einsetzen von Larven der Schwarzen Soldatenfliege zum Verstoffwechseln der in der zu behandelnden Flüssigkeit enthaltenen organischen Substanzen, wobei die Vorrichtung mindestens einen Prozessreaktor mit einem Trägerbett aus festem, nicht biologisch abbaubarem Material umfasst, auf dem die Larven der Schwarzen Soldatenfliege angeordnet sind,
**dadurch gekennzeichnet, dass** das Trägerbett eine volumetrische bzw. dreidimensionale sowie poröse Struktur aufweist, so dass die Larven einerseits mit der zu behandelnden Flüssigkeit in Kontakt kommen und sich andererseits je nach ihrem Stoffwechselbedarf durch die im Trägerbett vorhandenen Poren oder Durchgänge bewegen können, wobei sie in die Flüssigkeit eintauchen, um sich zu ernähren, und wieder auftauchen, um zu atmen,
wobei die volumetrische oder dreidimensionale Struktur des Trägerbetts eine körnige Struktur mit Körnchen ist, die so angeordnet sind, dass sie eine Schicht mit einer Dicke in der Größenordnung von mehreren Zentimetern oder eine Gitterstruktur bilden.

13. Einrichtung nach Anspruch 12, wobei das Trägerbett aus mindestens einem der folgenden Materialien besteht: Kunststoffmaterial, einschließlich Silikon- oder Elastomermaterial, Steinmaterial, metallisches Material, Verbundmaterial.

14. Einrichtung nach Anspruch 12 oder Anspruch 13, die ferner Zuführmittel zum Zuführen der zu behandelnden Flüssigkeit von oben in den mindestens einen Prozessreaktor umfasst.

15. Einrichtung nach einem der Ansprüche 12 bis 14, die ferner Filtermittel umfasst, die auf dem Boden des mindestens einen Prozessreaktors angeordnet sind, um die zu behandelnde Flüssigkeit zu filtern, und/oder Temperaturkontrollmittel zum Kontrollieren der Temperatur in dem Trägerbett und/oder in der Mischung, die aus dem Trägerbett und der zu behandelnden Flüssigkeit gebildet wird.

## Revendications

1. Procédé permettant de traiter des eaux usées contenant des substances organiques biodégradables en alimentant le liquide à traiter dans un réacteur de traitement contenant des larves de mouches soldats noires pour métaboliser les substances organiques contenues dans le liquide à traiter,
**caractérisé par** l'insertion dans le réacteur de traitement d'un lit de support constitué de matériau solide non biodégradable pour supporter les larves, dans lequel le lit de support a une structure volumétrique ou tridimensionnelle, ainsi que poreuse, de sorte que les larves, d'une part, sont autorisées à venir en contact avec le liquide à traiter et, d'autre part, sont autorisées à se déplacer à travers les pores ou passages dans le lit de support en fonction de leurs besoins métaboliques, plongeant dans le liquide pour s'alimenter et remontant pour respirer, dans lequel la structure volumétrique ou tridimensionnelle du lit de support est une structure granulaire, avec des granules agencés pour former une couche avec une épaisseur de l'ordre de plusieurs centimètres, ou une structure en treillis.

2. Procédé selon la revendication 1, dans lequel le lit de support est constitué d'au moins l'un des matériaux suivants : matériau plastique, y compris silicone ou matériau élastomère, matériau en pierre, matériau métallique, matériau composite.

3. Procédé selon la revendication 1 ou la revendication 2, dans lequel le liquide à traiter est ajouté au matériau solide du lit de support de façon à remplir tous les pores de la structure du lit de support et réaliser de ce fait une condition saturée en eau du lit de support.

4. Procédé selon la revendication 1 ou la revendication 2, dans lequel le liquide à traiter est ajouté au matériau solide du lit de support de façon à créer la présence simultanée de zones saturées et insaturées au sein du lit de support.

5. Procédé selon l'une quelconque des revendications précédentes, dans lequel le lit de support est maintenu stationnaire ou est entraîné en déplacement au sein du liquide à traiter.

6. Procédé selon l'une quelconque des revendications précédentes, comprenant en outre l'étape opérationnelle d'aération du mélange formé par le lit de support et le liquide à traiter, de façon à promouvoir une respiration des larves et augmenter de ce fait leur taux de survie.

7. Procédé selon l'une quelconque des revendications précédentes, comprenant en outre l'opération de commande de la température dans le lit de support et/ou dans le mélange formé par le lit de support et le liquide à traiter et/ou dans le milieu ambiant.

8. Procédé selon l'une quelconque des revendications précédentes, dans lequel le réacteur est alimenté de façon continue avec le liquide à traiter.

9. Procédé selon l'une quelconque des revendications précédentes, comprenant en outre l'opération de remise en circulation du liquide à traiter.

10. Procédé selon l'une quelconque des revendications précédentes, comprenant en outre l'opération de conditionnement du liquide à traiter avant, ou immédiatement après, l'alimentation du liquide à traiter dans le réacteur de traitement.

11. Procédé selon l'une quelconque des revendications précédentes, dans lequel le liquide à traiter est alimenté par le haut dans le réacteur, et dans lequel de préférence le liquide est également filtré sur le fond du réacteur.

12. Appareil permettant de traiter des eaux usées contenant des substances organiques biodégradables en utilisant des larves de mouches soldats noires pour métaboliser les substances organiques contenues dans le liquide à traiter, l'appareil comprenant au moins un réacteur de traitement avec un lit de support constitué de matériau solide non biodégradable sur lequel les larves de mouches soldats noires sont agencées,
**caractérisé en ce que** le lit de support a une structure volumétrique ou tridimensionnelle, ainsi que poreuse, de façon à permettre aux larves, d'une part, de venir en contact avec le liquide à traiter et, d'autre part, de se déplacer à travers les pores ou passages présents dans le lit de support en fonction de leurs besoins métaboliques, plongeant dans le liquide pour s'alimenter et remontant pour respirer,
dans lequel la structure volumétrique ou tridimensionnelle du lit de support est une structure granulaire, avec des granules agencés pour former une couche avec une épaisseur de l'ordre de plusieurs centimètres, ou une structure en treillis.

13. Appareil selon la revendication 12, dans lequel le lit de support est constitué d'au moins l'un des matériaux suivants : matériau plastique, y compris silicone ou matériau élastomère, matériau en pierre, matériau métallique, matériau composite.

14. Appareil selon la revendication 12 ou la revendication 13, comprenant en outre un moyen d'alimentation permettant d'alimenter par le haut le liquide à traiter dans ledit au moins un réacteur de traitement.

15. Appareil selon l'une quelconque des revendications 12 à 14, comprenant en outre un moyen de filtration placé sur le fond dudit au moins un réacteur de traitement permettant de filtrer le liquide à traiter, et/ou un moyen de commande de température permettant de commander la température dans le lit de support et/ou dans le mélange formé par le lit de support et le liquide à traiter.
